# EUROPEAN PATENT SPECIFICATION

(11) **EP 3 791 079 B1**
(45) Date of publication and mention of the grant of the patent: **14.12.2022**
(21) Application number: 18735176.2
(22) Date of filing: 10.05.2018
(51) Int. Cl.: F16B 41/00

(54) **SAFETY DEVICE**
SICHERHEITSVORRICHTUNG
DISPOSITIF DE SÉCURITÉ

(43) Date of publication of application: 17.03.2021
(73) Proprietor: "Height Technology Development" Ltd., 5800 Pleven (BG)
(72) Inventor: ZHEKOVA, Viktoriya Plamenova, 5800 Pleven (BG); MANOLOVA, Natalia Ilieva, 5800 Pleven (BG)
(74) Representative: Feira, Edoardo
(86) International application number: PCT/BG2018/000020
(87) International publication number: WO 2019/213722

(56) References cited:
- GB-A- 1 499 794
- US-A- 2 343 366
- US-B1- 6 305 890

## Description

### Technical field of the invention

The present invention concerns a safety device designed to cover an element or a hole which needs to be placed in a safe condition. More specifically, the present invention concerns a safety device which makes it possible to cover an element or a hole that needs to be placed in a safe condition with a safety cover that can be removed by moving it according to a predetermined combination.

### State of the art

In different fields of application it is often necessary to cover elements which need to be placed in a safe condition, in such a way that they can be accessed exclusively by authorized operators/users.

By way of example, an element which needs to be placed in a safe condition may be a locking bolt or nut of a car or motorbike wheel rim. As an alternative, the element which needs to be placed in a safe condition may be the filler cap of a car or a motorbike. As another alternative, the element which needs to be placed in a safe condition may be a bolt, a nut, a button of a device. As another alternative, the element which needs to be placed in a safe condition may be a hole or a cavity such as, for example, the hole of the filler cap of a car or a motorbike, or an electric outlet, etc. More generally, the element which needs to be placed in a safe condition may be any element that must not be rotated, pushed, removed, accessed, etc. by unauthorized operators/users.

The invention allows such an element to be placed in a safe condition by means of a safety device that, through a safety cover, covers the element in such a way as to prevent access to the latter unless the safety cover is removed. The removal of the safety cover requires that the latter be moved according to a predetermined combination and thus allows said element to be accessed exclusively by the staff who knows the combination.

An embodiment of the invention may refer to a safety device designed to cover an element or a hole which needs to be placed in a safe condition, wherein the safety device comprises: a coded body, a safety cover, a locking element positioned between the coded body and the safety cover, wherein the coded body comprises a first contact surface and a second contact surface, wherein the locking element comprises an abutting element configured in such a way that it abuts the first contact surface and the second contact surface, wherein the coded body comprises a release locking element positioned between the first contact surface and the second contact surface.

The coded body comprises a coding cavity inside which the abutting element and the release locking element can be at least partially positioned.

In some embodiments, the coding cavity can be included between the first contact surface and the second contact surface.

In some embodiments, the coded body may comprise a release cavity connected with the coding cavity, through which the abutting element can pass.

In some embodiments, the release locking element can be at least partially positioned along a longitudinal extension of the release cavity.

In some embodiments, the safety cover may be provided with grooves. In some embodiments, the distance between the first contact surface and the release cavity and/or the distance between the second contact surface and the release cavity may depend on the position of the grooves and may be preferably equal to the dimension of a plurality of grooves, even more preferably equal to a multiple of the dimension of one of the grooves.

In some embodiments, the safety cover may comprise a seat for the locking element.

In some embodiments, the locking element may comprise a body, wherein the body may describe a plane, wherein the abutting element may be inclined with respect to the plane.

In some embodiments, the coded body may comprise a first abutting ring and a second abutting ring, wherein the first abutting ring may comprise the first contact surface, wherein the second abutting ring may comprise the second contact surface, wherein the first abutting ring and the second abutting ring can be movable with respect to each other in a coding position of the coded body and can be fixed with respect to each other in a locking position of the coded body.

In some embodiments, the coded body may comprise a plurality of locking rings among which there are the first abutting ring and the second abutting ring, wherein the coded body may comprise a supporting element on which the first abutting ring, the second abutting ring and the plurality of locking rings are assembled.

In some embodiments, the locking element may comprise one or more one-way passage elements that are such as to allow the passage of the abutting element in one direction and to prevent it in the opposite direction, and/or wherein the locking element may comprise one or more surfaces that are oblique with respect to a direction of insertion of the abutting element in the coded body.

A further embodiment of the invention may refer to a safety device designed to cover an element or a hole which needs to be placed in a safe condition, wherein the safety device comprises: a safety cover, a locking element positioned between the safety cover and the element or hole to be placed in a safe condition, wherein the safety cover comprises a first contact surface and a second contact surface, wherein the locking element comprises an abutting element configured in such a way that it abuts the first contact surface and the second contact surface, and wherein the safety cover comprises a release locking element positioned between the first contact surface and the second contact surface.

Safety devices according to the state of the art are known, for instance, from documents GB 1 499 794 A, US 6 305 890 B1 and US 2 343 366 A.

### Brief list of the drawings

Further characteristics and advantages of the invention will be highlighted through the analysis of the following detailed description of some preferred but not exclusive embodiments, which are illustrated by way of indicative and non-limiting example with the support of the attached drawings. In the drawings, the same reference numbers identify the same components.

In particular:
- Figures from 1A to 1D schematically show a safety device 1000 according to an embodiment of the invention;
- Figure 2 schematically shows a method of use of the safety device 1000;
- Figures from 3 to 6 schematically show several locking elements according to alternative embodiments of the invention;
- Figures from 7A to 7C schematically show a coded body 7100 according to an alternative embodiment of the invention;
- Figures 8 and 9 schematically show safety devices 8000 and 9000 according to alternative embodiments of the invention;
- Figures 10A and 10B schematically show a safety device 10000 according to an alternative embodiment of the invention;
- Figures 11A and 11B schematically show a safety device 11000 according to an alternative embodiment of the invention;
- Figures 12A, 12B and 12C schematically show a safety device 12000 according to an alternative embodiment of the invention.

### Detailed description of the invention

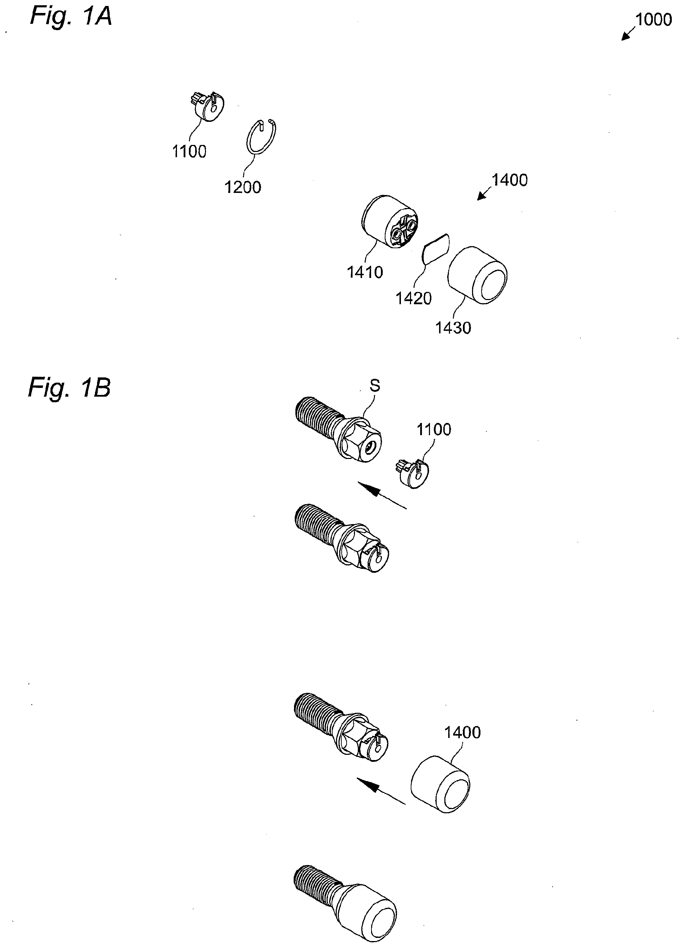

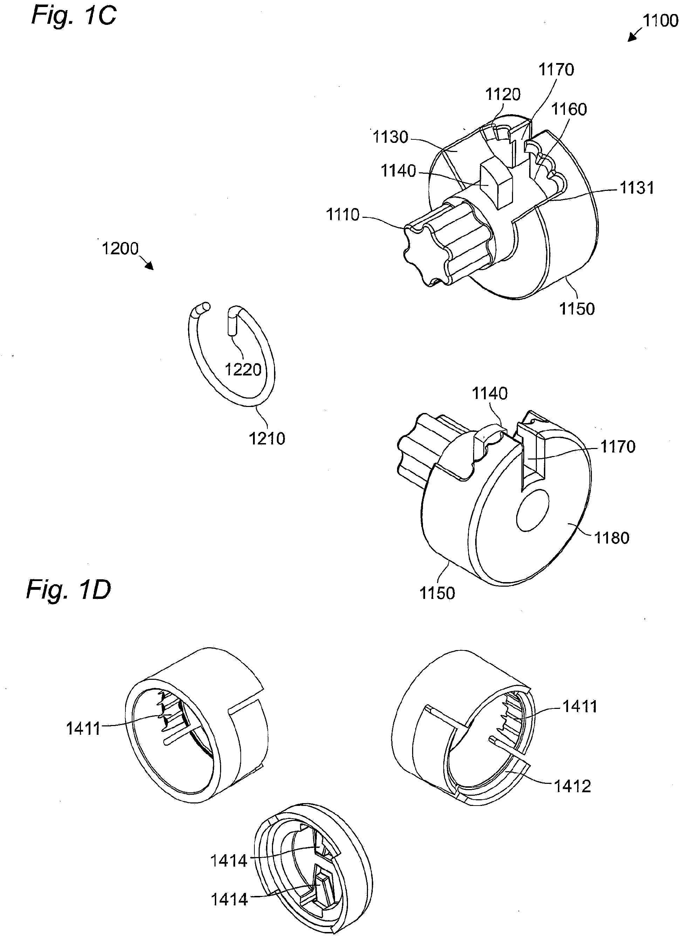

Figures from 1A to 1D schematically illustrate an embodiment of the invention. Figure 1A schematically shows an exploded view of the safety device 1000, while Figure 1B schematically shows the application of the safety device 1000 to an element S which needs to be placed in a safe condition. In the case illustrated in Figure 1B, the element S to be placed in a safe condition is a bolt. However, the present invention should not be considered limited to this type of elements to be placed in a safe condition but, for example, it can be used to place in a safe condition any element that must not be rotated, pressed, removed or accessed.

As can be seen in Figure 1A, the safety device 1000 comprises a coded body 1100, a safety cover 1400 and a locking element 1200. Generically, the locking element 1200 is configured in such a way as to allow the safety cover 1400 to be removed from the coded body 1100 through a simple movement of the safety cover 1400 according to a predetermined combination.

In the embodiment illustrated herein, the safety cover 1400 comprises an inner cover 1410, an anti-perforation element 1420 and an outer cover 1430. However, it can be understood that the safety cover 1400 can be made as a single element, as clearly explained in the following description. The inner cover 1410 will be described in greater detail in the remaining part of the description in order to illustrate the-characteristics which make it possible to lock and release the safety device 1100.

The anti-perforation element 1420 has the function to prevent the perforation of the safety cover 1400 by staff who is not authorized to remove it. Thus, the anti-perforation element 1420, for example, may be a special plate made of an anti-perforation metal. It will therefore be clear that the anti-perforation element 1420 is to be considered as an optional, since embodiments will be possible in which resistance to perforation may be considered unnecessary, or embodiments will be possible in which the inner cover 1410 and/or the outer cover 1430 are made of an anti-perforation metal.

The outer cover 1430 has a similar function of protecting the inner cover 1410, in addition to facilitating the production of the device, since it makes it possible to use different materials and/or moulds for the inner cover 1410 and for the outer cover 1430. However, as in the case of the anti-perforation element 1420, the outer cover 1430 is to be considered as an optional and it will be possible to provide an embodiment in which the function of the outer cover 1430 is served by the inner cover 1410.

The locking element 1200 is positioned between the coded body 1100 and the safety cover 1400. Specifically, in the embodiment illustrated herein, it is positioned between the coded body 1100 and the inner cover 1410. Even more specifically, in the embodiment illustrated herein and as better clarified in the description below, it is previously inserted in the inner cover 1410, inside a respective seat, so that when the safety cover 1400 is placed on the coded body 1100 it comes to be positioned between the two elements.

For this purpose, in the embodiment illustrated herein, the locking element 1200 has a substantially circular shape and/or a shape that allows its elastic compression. More specifically, in the embodiment illustrated herein, the locking element 1200 is a snap ring, which means that it behaves elastically, as is known. Specifically, it can be compressed, inserted in its respective seat and released, so that the elastic thrusting action it exerts on the safety cover 1400 maintains it in position with respect to the safety cover 1400. Specifically, its insertion in the respective seat prevents it from moving in the longitudinal direction of extension of the cavity of the safety cover 1400. On the contrary, even though it is pressed against the safety cover 1400, it can rotate with respect to the latter, as described here below, following the application of sufficient force.

As can be seen in Figure 1B, the application of the safety device 1000 to the element to be placed in a safe condition S is obtained through a first application of the coded body 1100 to the element to be placed in a safe condition S, followed by the application of the safety cover 1400, inside which the locking element 1200 was previously positioned, to the coded body 1100. Specifically, in the embodiment illustrated herein, as can be seen in Figure 1C, the coded body 1100 comprises a fixing element 1110 whose shape allows it to be restrained in the element to be placed in safety condition S. In the embodiment illustrated herein, the fixing element 1110 is constituted by a plurality of small blades which are compressed by inserting them in a corresponding hole provided in the element to be placed in a safe condition S, in such a way as to ensure the union between the coded body 1100 and the element to be placed in a safe condition S. It will be clear, however, that different embodiments of the fixing element 1110 are possible. For example, it will be possible to make the fixing element 1110 with a different shape, which however should make it possible to join the coded body 1100 to the element to be placed in a safe condition S in such a way that they are substantially integral with each other. In alternative embodiments, it will also be possible to glue or weld the safety device 1000 onto the element to be placed in a safe condition S, so that the fixing element 1110 consists of glue, a weld or similar systems. In some embodiments, the component 1100 and the component S, instead of being joined to each other, can be replaced by a single piece constituted, for example, by a mould.

As shown in Figure 1C, the coded body 1100 is provided with a contact surface 1130 and a contact surface 1131. In the embodiment illustrated herein, the contact surface 1130, as well as the contact surface 1131, extends in a substantially radial direction with respect to the longitudinal axis of extension of the coded body 1100. This embodiment, however, is not necessary. In fact, it will be sufficient for the contact surface 1130 and/or the contact surface 1131 to have such a shape that they can lock the movement of the locking element 1200, as is clear from the following description.

The locking element 1200 comprises an abutting element 1220 configured in such a way that it abuts the contact surface 1130 and the contact surface 1131. In this specific embodiment, the locking element 1200 is substantially provided with a body 1210 in the shape of a snap ring, meaning substantially the shape of an arc of a circle, with radial extension preferably included between 210 degrees and 350 degrees.

Always in the embodiment illustrated herein, the locking element 1200 is also provided with an abutting element 1220 configured in such a way that it abuts a corresponding contact surface. Specifically, in the embodiment illustrated herein, the abutting element 1220 is obtained through an extension of the body 1210 oriented in a substantially radial direction with respect to the body 1210. More specifically, in the embodiment illustrated herein, the extension of the abutting element 1220 is oriented towards the inside of the body 1210. However, the present invention is not limited to this embodiment and an extension oriented towards the outside of the body 1210 will also be possible.

The coded body 1100 furthermore comprises a release locking element 1140 positioned between the contact surface 1130 and the contact surface 1131. This characteristic, as clearly explained in the description provided below, allows the safety cover to be extracted from the element to be placed in a safe condition S only by staff who know the coding of the coded body 1100.

As can be seen in Figure ID, illustrating a section of the inner cover 1410, the inner cover 1410 comprises a seat 1412. The locking element 1200 is inserted in the seat 1412 through the compression of the locking element 1200, the respective positioning of the same in the seat and its elastic release. As can also be seen in the figure, the inner cover 1410 is provided with internal grooves 1411. The grooves 1411 have a shape that matches the external shape of the element to be placed in a safe condition S. Specifically, the shape of the grooves 1411 is such as to allow the rotation of the inner cover 1410 on the element to be placed in a safe condition S with clicks. In other words, the size of the grooves 1411 is such that it allows the movement of the inner cover 1410 with respect to the surface of the element to be placed in a safe condition S, but only through the application of a force that must be sufficient to overcome the interaction between the grooves 1411 and the external shape of the element to be placed in a safe condition S. This interaction is constituted by the clicks mentioned above which, as clearly explained below, allow the staff authorized for the removal of the safety cover 1400 to execute the combination associated with the coded body 1100 in such a way as to remove the safety cover 1400. It will be clear, however, that the invention can be implemented also without the grooves 1411, through a simple visual measurement of the rotation angle of the safety cover 1400. In order to facilitate this operation, the safety cover 1400 and/or the coded body and/or the element to be placed in a safe condition S may comprise one or more alignment marks, not illustrated herein. As can be seen in Figure 1C, the coded body 1100 comprises a coding cavity 1160 inside which the abutting element 1220 can be positioned. In the direction of movement of the abutting element 1220 the coding cavity is included between the contact surface 1130 and the contact surface 1131.

As can be seen in Figure 1C, the coded body 1100 comprises a release cavity 1170 connected to the coding cavity 1160, through which the abutting element 1220 can pass. Specifically, once having been aligned as described below, the locking element 1200, or at least the abutting element 1220, can pass through the release cavity 1170 in order to release the safety device 1000.

As can be seen in Figure 1C, the coded body 1100 furthermore comprises the release locking element 1140, so that it is positioned at least partially along a longitudinal extension of the release cavity 1170. The dimensions of the release locking element 1140 are such as to prevent the movement of the abutting element 1220 from a position on the side of the release locking element 1140 opposite the release cavity 1170 towards the release cavity 1170. Specifically, the presence of the release locking element 1140 prevents this movement, so that in order to move out of the release cavity 1170 the abutting element 1220 is forced to follow a labyrinth-shaped path, starting from a position on the side of the release locking element 1140 opposite the release cavity 1170, as described below. The shape and position of the release locking element 1140 at least partially define the labyrinth-shaped path and thus the combination that must be known to the person who needs to release the safety device 1000.

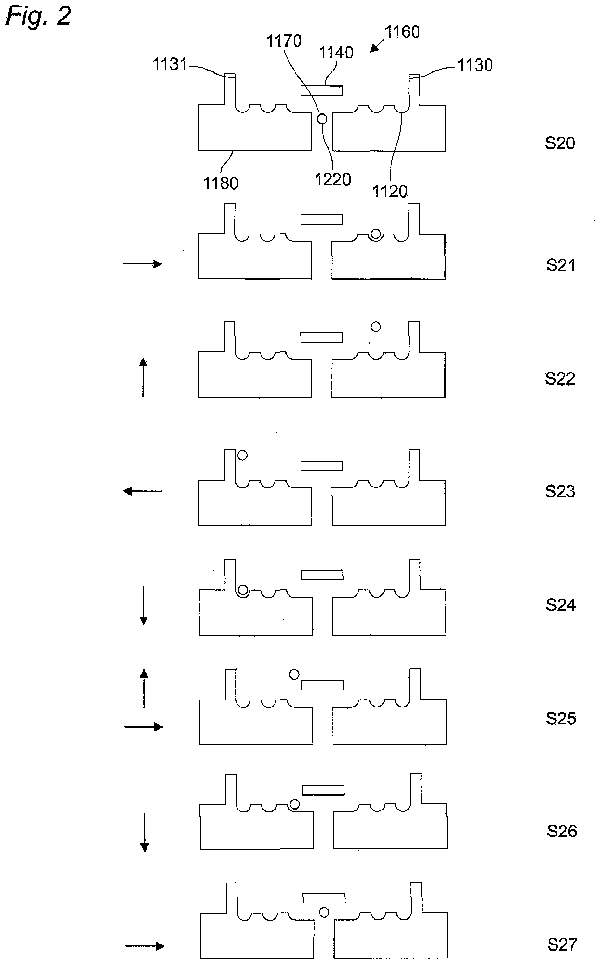

As can be observed in Figure ID, the terminal portion of the inner cover 1410 comprises one or more thrust elements 1414, for example elastic tabs, configured in such a way as to thrust the inner cover in the opposite direction with respect to the coded body 1100. The thrust elements 1414 make it possible to move the safety cover 1400 away from the coded body. This advantageously makes it possible to insert a part of the locking element 1200, for example the abutting element 1220, into apposite grooves 1120. Consequently, this makes it possible to prevent any accidental movement of the safety cover 1400 with respect to the coded body 1100. Figure 2 schematically illustrates a method of use of the embodiment of the invention illustrated in Figures from 1A to 1D. Specifically, Figure 2 schematically illustrates a top section view of the locking element 1200, as well as a simplified view of the part of the coded body 1100 which interacts with the locking element 1200. Figure 2 illustrates different operating steps S20-S27. The movement of the safety cover 1400 with respect to the coded body 1100 is schematically illustrated on the left of each step.

As can be seen in Figure 2, in step S20 the safety cover 1400 is moved in the direction of the coded body 1100, which results in the insertion of the locking element 1200 through the cavity 1700. In step S21, the locking element 1200 is thus inside the cavity 1160. From this step, a sufficient rotary movement of the safety cover 1400 to the right or to the left locks the safety cover 1400 onto the coded body 1100.

By way of example, in step S23 the safety cover 1400 is rotated to the left, that is, anticlockwise, with respect to the coded body 1100. Since the locking element 1200 is positioned inside its seats in the safety cover 1400, in the absence of other forces acting on it, it moves together with the safety cover 1400, and parallel, as illustrated above. Specifically, as the locking element 1200 is fitted elastically in the safety cover 1400, it generates friction with respect to the safety cover 1400. This means that when the position of the locking element 1200 is fixed the safety cover 1400 can rotate in any case, if a force exceeding the friction present between these elements is applied. On the contrary, if the position of the locking element 1200 is not fixed, it rotates together with the safety cover 1400.

At this point, as illustrated in steps S23 and S24, the safety cover cannot be separated from the coded body 1100. Actually the abutting element 1220 comes in contact with the grooves 1120, or with the coded body, if the grooves 1120 are not present, thus preventing the separation of the safety cover 1400 from the coded body 1100. The thrust elements 1414 insert the abutting element 1220 into a groove 1120, which advantageously prevents any movement of the safety cover 1400 with respect to the coded body 1100. The safety device is thus locked on the element or hole S.

At this point, a random clockwise or anticlockwise rotation of the safety cover 1400 does not allow the separation of the safety cover 1400 from the coded body 1100. First of all, this happens because the rotation of the locking element 1200 would be impossible, being prevented by the fact that it is positioned in the groove 1120. In any case, even if pressure is exerted on the thrust elements 1414 to overcome this problem, it is not possible to extract the abutting element 1220 from the cavity 1170 with a random movement, owing to the presence of the release locking element 1140. In greater detail, as illustrated in steps S25, S26 and S27, the only way to extract the safety cover is by moving through a labyrinth-shaped path according to a predetermined coding, given by the relative position of the contact surface 1130, 1131 and the release cavity 1170 and by the shape and position of the release locking element 1140. The combination thus comprises rotation and thrust elements, which can be configured according to a large number of possible combinations, by varying the shape and the position of the above mentioned elements.

It will be clear that, in the situation described above, in the presence of the thrust elements 1414, the rotation steps are possible only if a thrusting action allows the locking element 1220 to be released from the grooves 1120. The use of the combination, in the presence of the thrust elements 1414, thus requires the correct application of thrusting and rotation movements together. Furthermore, it will be clear that alternative embodiments can be implemented, in which the device can be configured in such a way that instead of thrusting the safety cover 1400 to release the locking element 1220 so as to allow it to rotate together with the safety cover 1400, it will be necessary to pull the safety cover 1400.

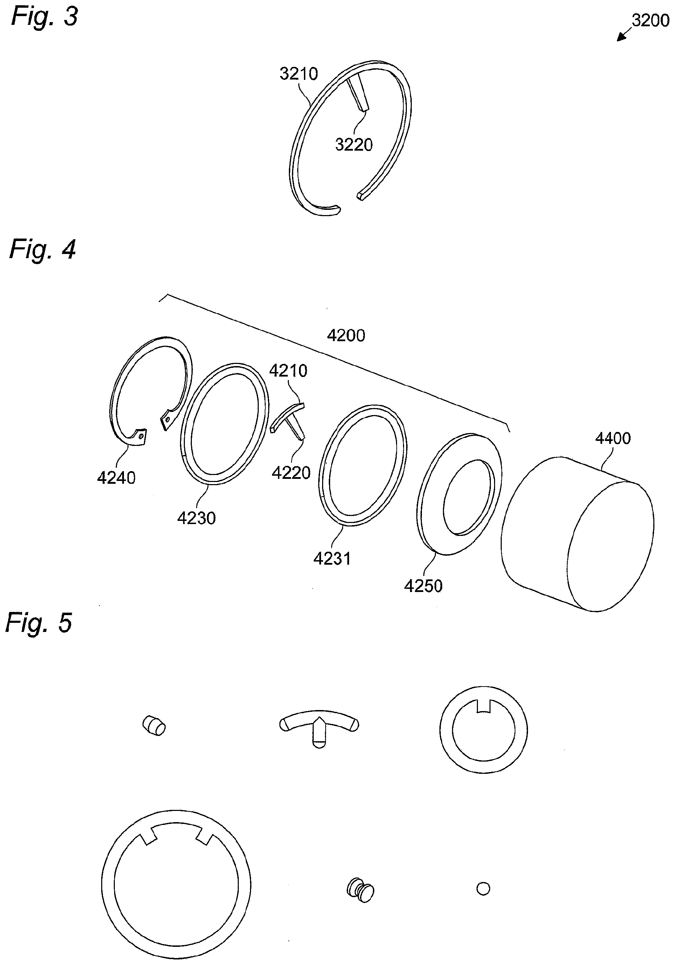

In some embodiments, to facilitate the input of the correct combination, the distance between the contact surface 1130 and the release cavity 1170 and/or the distance between the contact surface 1131 and the release cavity 1170 depends on the position of the grooves 1411, and is preferably equal to the angular dimension of a plurality of grooves 1411, even more preferably equal to a multiple of the angular dimension of one of the grooves 1411. Since the distances that define the combination are a function of the dimension of the grooves, the combination will thus be easy to memorize as a given number of clicks in one or more directions. Figure 3 schematically illustrates a locking element 3200, which is a possible variant of the locking element 1200 described above. Specifically, the locking element 3200 comprises an abutting element 3220 that is not positioned at one end of the body 3210, as described above with reference to the locking element 1200, but rather in a part of the body 3210 which is included between its two ends, preferably in a substantially median position with respect to the two ends. It will be clear that the invention can work in a similar manner if the locking element 1200 is replaced with the locking element 3200.

Figure 4 schematically illustrates a locking element 4200, which is a possible variant of the locking element 1200 and/or of the locking element 3200 described above. Specifically, the locking element 4200 comprises an abutting element 4220 positioned in a part of the body 4210 which is included between the two ends of the body 4210. In this case, the body 4210 has the shape of an arc of a circle with an angle preferably, smaller than 180°, more preferably smaller than 90°. Since in this case an elastic insertion as in the cases described above is not possible, in order to prevent the locking element 4200 from moving with respect to the safety plug 4400 two sealing rings 4230, 4231 are used, between which the locking element 4200 is kept pressed. The pressure is obtained by means of a thrust ring 4250, whose shape is such as to exert an elastic thrusting action in the longitudinal direction of extension of the safety cover 4400, and of a locking ring 4240, for example a snap ring. It will thus be clear that the safety cover 4400 comprises at least one seat for the locking ring 4240, even if not shown. It will be clear that the invention can work in a similar manner if one or more of the locking elements 1200, 3200 is/are replaced with a locking element 4200.

In some embodiments, visible for example in Figure 3, the locking element 3200 comprises a body 3210 which describes a plane. In other words, there is a plane that includes the body 3210. The abutting element 3220 can also belong to the plane or it can be inclined with respect to said plane, preferably with an angle included between 5° and 20°. The inclination of the abutting element 3220 allows the safety cover 1400 to behave elastically while being fitted on the coded body 1100 and to thrust against the grooves 1120, or in any case against the corresponding surface if they are not provided, in response to an attempt to separate the safety cover 1400 from the coded body 1100. This characteristic advantageously makes it possible to fit the safety cover 1400 on the coded body 1100 independently of the alignment between the abutting element 3220 and the release cavity 1170. On the contrary, what has been described above applies for the release operation.

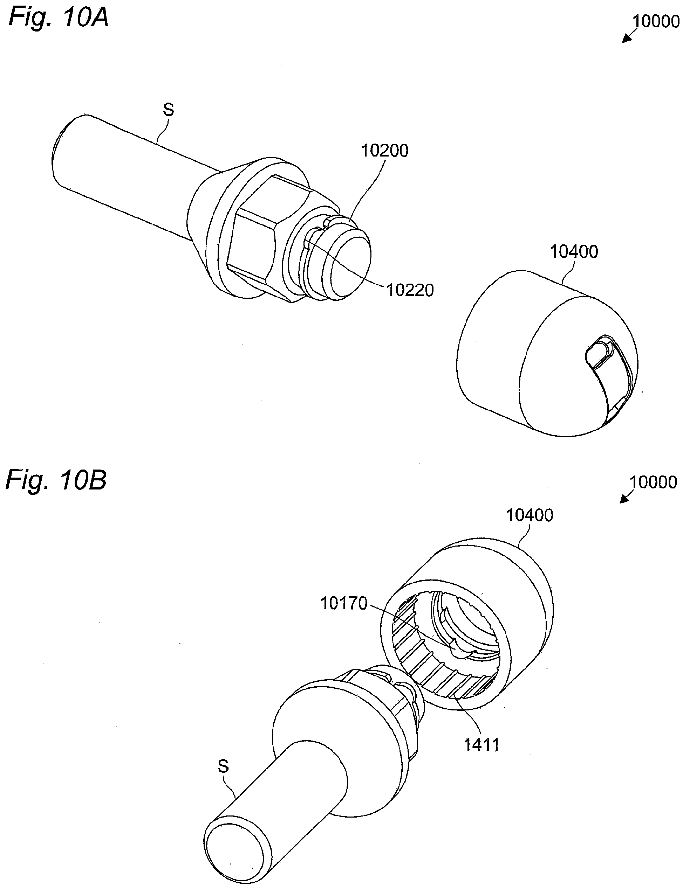

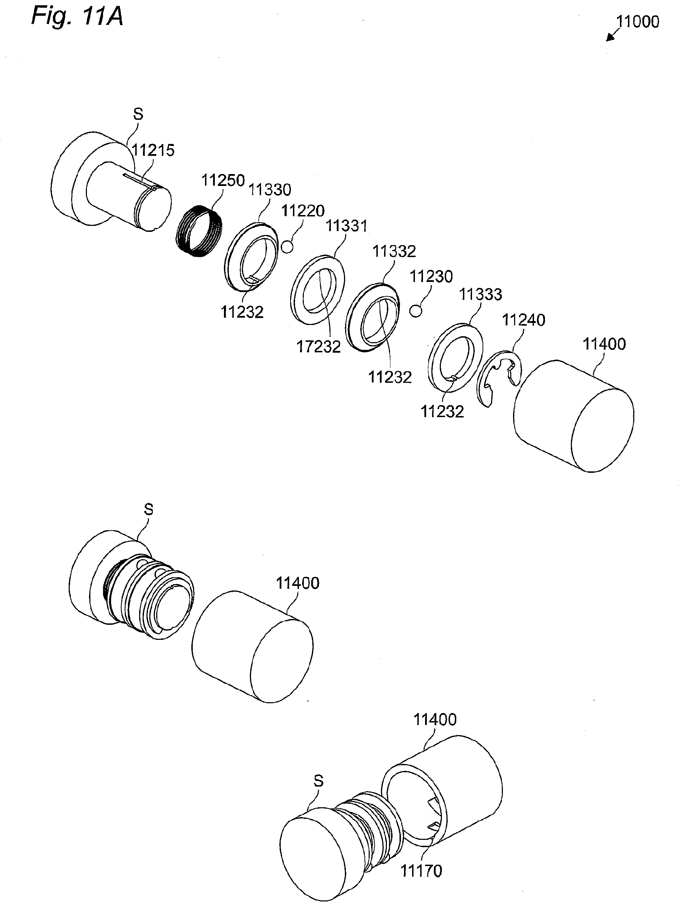

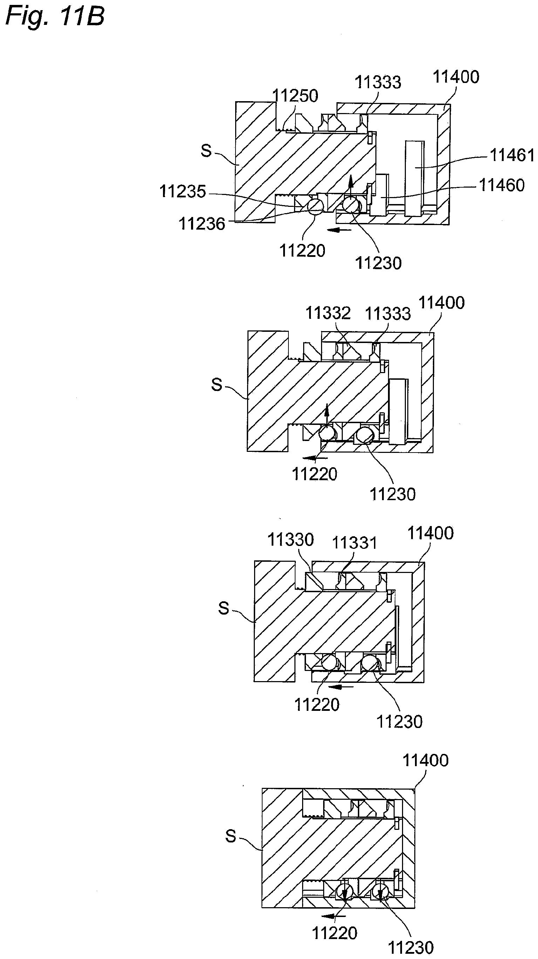

Figures 11A and 11B schematically show a safety device 11000 according to an alternative embodiment of the invention, which allows a similar operating mode, that is, allows the safety cover to be inserted independently of the position of the abutting element, but is provided with an alternative type of abutting element. In the embodiment illustrated there are two abutting elements, however the same principle can clearly be applied independently of the number of abutting elements provided. In this embodiment, the locking elements are fitted on the element to be placed in a safe condition S and the abutting elements 11220, 11230 are obtained by means of spheres held in position by sealing rings 11330, 11331, 11332, 11333. As far as the release operation is concerned, this embodiment works in a manner similar to that discussed in relation to Figures 10A and 10B, in which the locking element is positioned on the element to be placed in a safe condition S. Even in this case, therefore, the release will take place through the alignment of the abutting element 11220, 11230 in the respective cavity provided inside the safety cover 11400.

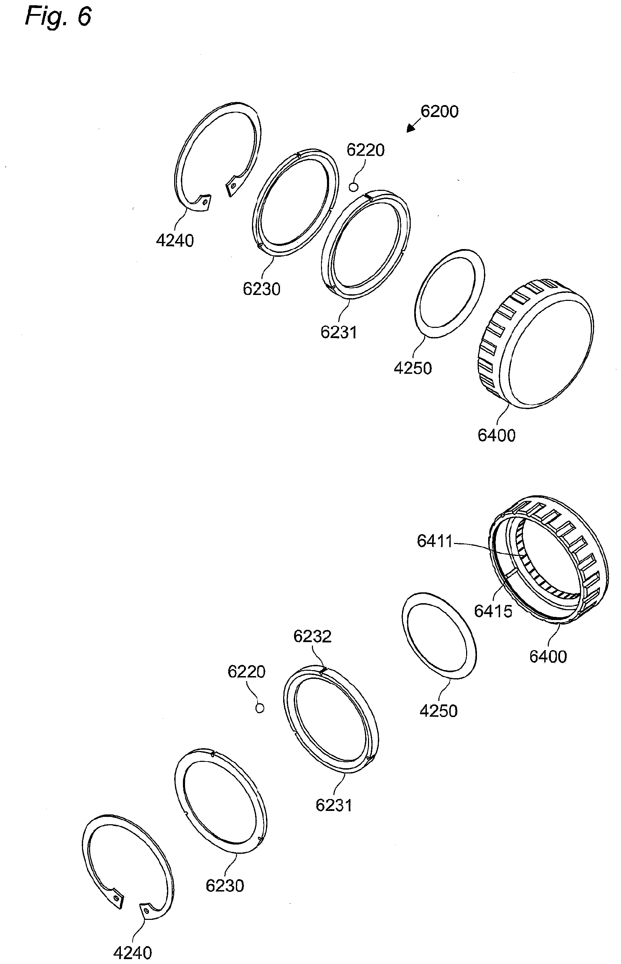

Differently from Figures 10A and 10B, however, this embodiment uses abutting elements 11220, 11230 similar to those used in the embodiment shown in Figure 6, also for the purpose of clarifying how the different embodiments can be combined with each other.

Furthermore, this embodiment adds a characteristic that allows the abutting elements 11220, 11230 of this type to behave similarly to the abutting element 3220. In other words, this embodiment makes it possible to fit the safety cover 11400 on the element to be placed in a safe condition S also in the presence of abutting elements 11220, 11230 not necessarily aligned with the release cavity 11170.

This is possible because at least some of the locking rings are movable along the element to be placed in a safe condition S and kept pressed by the thrust ring 11250, for example a spring. Specifically, as can be seen more easily in Figure 10B, when the abutting element 11230 comes into contact with the safety cover 11400, it is pushed towards the element to be placed in a safe condition S. The movement is possible because the sealing ring 11332 can be moved to the left, thus leaving more space between the sealing rings 11332 and 11333, in which the abutting element 11230 can be inserted.

When the abutting element 11230 enters the coding cavity 11460, the thrusting force exerted by the thrust ring 11250 moves the abutting element 11230 back to its most external position, in such a way that the latter fits into the coding cavity. The same mechanism can be applied to the insertion of the abutting element 11230 in the coding cavity 11461 and to the insertion of the abutting element 11220 in the coding cavity 11460. It is therefore possible, as in the case of the abutting element 3220, to insert the abutting element in the respective coding cavity with no need to pass through the release cavity 11170.

Furthermore, it is advantageously possible to prevent the extraction if the abutting elements 11220, 11230 are not aligned with the release cavity 11170. This is advantageously obtained by making the sealing rings 11330 and 11331, as well as the sealing rings 11332 and 11333, in an asymmetrical manner.

Specifically, as can be more easily seen in Figure 10B, the sealing ring 11330 comprises an oblique surface 11235, while the sealing ring 11331 comprises a surface 12236 which is at least partially complementary to the shape of the abutting element 11220.

During the insertion, the abutting element 11220 is pushed outside of the complementary surface 11236 and along the oblique surface 11235. Thanks to the angular position of the oblique surface 11235, this results in a thrusting action of the sealing ring 11330 to the left, thus opening a space between the sealing rings 11330 and 11331, as previously described. During the extraction of the safety cover 11400, the abutting element 11220 is pushed against the complementary surface 11236. Thanks to the fact that the external shape of the abutting element 11220 matches that of the complementary surface 11236, the abutting element 11220 remains confined by the complementary surface 11236 and cannot move, thus preventing the extraction of the safety cover 11400. It will be clear that this be heavier can be applied in a similar manner to the abutting element 11230. In some embodiments, furthermore, anti-rotation notches 1121 can be provided, which cooperate with anti-rotation teeth 11232 in order to avoid the rotation of the sealing rings. Furthermore, the length of the different anti-rotation notches 11215 along the element to be placed in a safe condition S can be different, in such a way as to define the maximum position that can be reached by the sealing rings along the element to be placed in a safe condition S.

Figure 5 schematically shows locking elements according to alternative embodiments of the invention. Specifically, as is evident from the examples illustrated in Figure 5 and from the preceding description, it is sufficient for the shape of the locking element, and more specifically of the abutting element, to project towards the coding cavity, or towards the respective contact surface, or towards the release locking element. Therefore, any of the locking elements shown in Figure 5 can be used instead of any of the locking elements previously described.

Figure 6 schematically illustrate a locking element 6200, which is a possible variant of the locking element 1200 and/or of the locking element 3200 and/or of the locking element 4200 described above. Specifically, the locking element 6200 comprises an abutting element 6220 in a substantially spherical shape. To prevent the abutting element 6220 from moving with respect to the safety plug 6400, two sealing rings 6230, 6231 are used, between which the abutting element 6220 is kept pressed. The combination of the sealing rings 6230, 6231 and the abutting element 6220 thus produces the locking element 6200. It will be clear that the invention can work in a similar manner if one or more of the locking elements 1200, 3200, 4200 is/are replaced with a locking element 6200.

In the embodiment illustrated above, the safety cover 6400 comprises grooves 6411 whose function is similar to that of the grooves 1411 1 described above. It is clear that in this case, too, the invention can be carried out without the grooves 6411.

In the embodiment illustrated above, the safety cover 6400 comprises one or more anti rotation teeth 6415 corresponding to one or more anti rotation notches 6232. These characteristics, which should be considered optional, prevent the rotation of the sealing ring 6230, 6231 with respect to the safety cover 6400.

Figures from 7A to 7C schematically show a coded body 7100 according to an alternative embodiment of the invention. Specifically, the coded body 7100 differs from the coded body 1100 as it allows the combination, or the coding of the coded body, to be programmed.

More specifically, the coded body 7100 comprises at least one abutting ring 7132 and one abutting ring 7133, wherein the abutting ring 7132 comprises a contact surface 7131 and wherein the abutting ring 7133 comprises a contact surface 7130. The function of the two contact surfaces 7130 and 7131 is similar to that of the contact surfaces 1130 and 1131 described above. In addition to the above, the coded body 7100 comprises an abutting ring 7142 and an abutting ring 7143, wherein the abutting ring 7142 comprises a release locking element 7140 and wherein the abutting ring 7143 comprises a release locking element 7141. It will be clear that, although in the embodiment illustrated above there are two abutting rings, each one with a single contact surface, it will be possible to implement two contact surfaces in a single abutting ring, thus reducing the possibility to configure the coded body, but in any way maintaining a possibility of configuration. It will furthermore be understood that although in the embodiment illustrated above two abutting rings are used, each with a respective release locking element, it will be possible to make the release locking element with a single abutting ring, thus reducing the possibility to configure the coded body, but in any way maintaining a possibility of configuration, since it is possible to vary the angular position of the release locking element. On the contrary, a plurality of rings provided with a release locking element make it possible to vary also the shape of the release locking element, or to position several release locking elements in the coding cavity, in such a way that the release combination is more complex.

In order to allow the modification of the combination of the coded body 7100, the abutting rings can be moved with respect to each other in a coding position of the coded body 7100 and are fixed with respect to each other in a locking position of the coded body 7100. The passage between the locking position and the coding position can be obtained in different manners, for example by exerting pressure on the rings so that they are locked due to the friction that is generated, or by inserting locking elements in suitable slots provided in the abutting rings, not illustrated herein, in such a way as to prevent their mutual movement. In the embodiment illustrated, the coded body 7100 comprises a plurality of locking rings 7191, 7192,193 between which the abutting rings are positioned. The number of locking rings illustrated is three, however it is clear that the invention can also be carried out only with the locking rings 7191 and 7193. In the embodiment illustrated, the locking rings produce friction and thus lock the abutting rings 7132, 7133, 7142, 7143 and are fitted on a supporting element 7194. The supporting element 7194 can be threaded, in order to allow one or more of the locking rings 7191-7193, preferably the locking ring 7191, to be screwed therein, in such a way as to exert pressure on the abutting rings and thus pass from the coding position, when loosening, to the locking position, when tightening.

In the embodiment illustrated, the supporting element 7194 has a hollow cylindrical shape in such a way as to allow access to the hole to be placed in a safe condition S. It will be clear however, that alternatively any shape allowing the assembly of the abutting rings and the locking rings can be implemented.

In the embodiment illustrated, the locking rings have complementary surfaces, so that in the locking position the complementary surfaces of two adjacent locking rings mesh with each other to prevent the mutual rotation of the locking rings. In the embodiment illustrated, the complementary surfaces are obtained through a half-cylinder which extends from the surface of each one of the locking rings in the longitudinal direction of extension of the supporting element 7194. This configuration advantageously makes it possible to avoid the rotation between the locking rings and, since the two complementary half-cylinders form a complete cylinder, provides also a cylinder on which the abutting rings 7132, 7133,7142,7143 can be assembled.

In some embodiments not illustrated herein, it will be possible to create an external surface of the half-cylinders which at least partially comprises locking teeth intended to interact with locking cavities provided in the abutting rings 7132, 7133, 7142, 7143. In this way, it will be possible to lock the abutting rings in a specific position, thanks to the fixing obtained between the locking teeth and the locking cavities during the assembly of the coded body 7100.

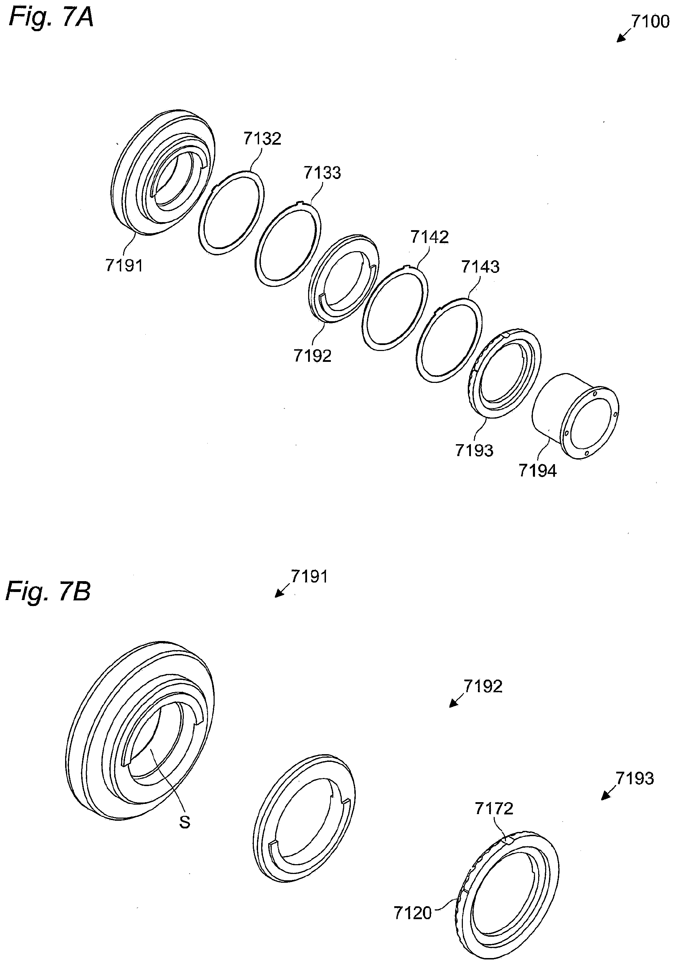

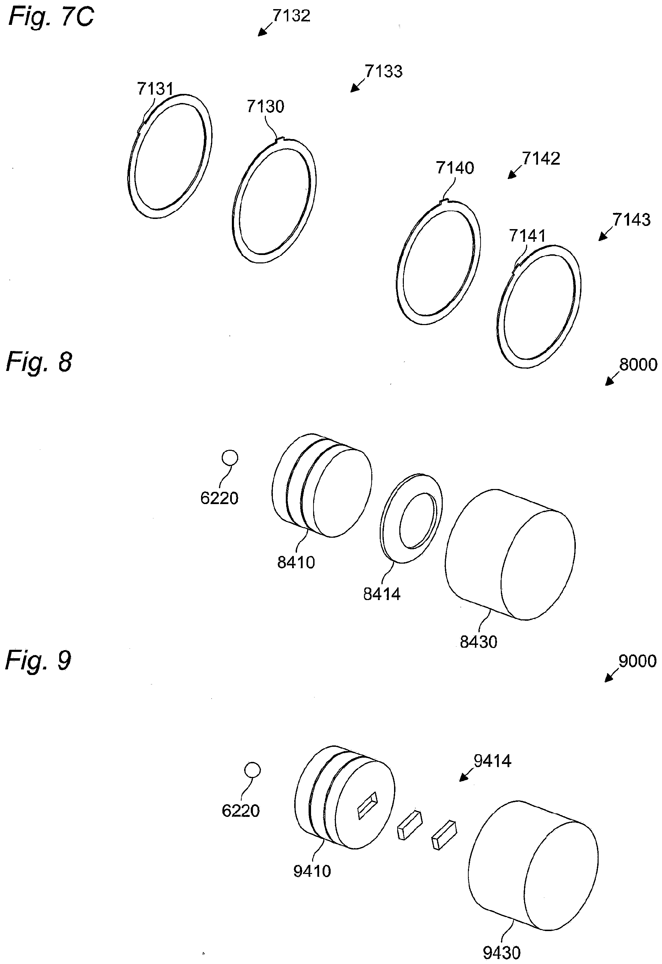

In the embodiments illustrated in Figures 7A-7C, the locking ring 7193 comprises grooves 7120 whose function is similar to that of the grooves 1120 described above. Therefore, the observations on the function and the optional presence of the grooves 1120 apply also to the grooves 7120.

Figures 8 and 9 schematically show safety devices 8000 and 9000 according to alternative embodiments of the invention.

Specifically, each one of the safety devices 8000, 9000 comprises abutting elements 6220 similar to those previously described with reference to Figure 6. Differently from the preceding description, the safety elements do not comprise thrust elements 1414 in the shape of small blades. In the case of Figure 8, pressure is exerted by a thrust element 8414, for example an annular spring, positioned between the inner cover 8410 and the outer cover 8430. In the case illustrated in Figure 9, the thrust element 9414 is constituted by two magnets positioned between the inner cover 9410 and the outer cover 9430 in such a way as to mutually repel each other and thus move the inner cover 8410 away from the outer cover 8430. It will be clear that the thrust elements 8414, 9414 can be used also in embodiments comprising locking elements different from the locking elements 6200. It will also be clear that, since in these embodiments the thrusting action is exerted in the opposite direction with respect to the situation described above, that is, by pushing the abutting elements in the direction of the coded body, the position of the grooves 1120 can advantageously be reversed, making them not on the side of the cavity 1160 towards the release cavity 1170 but on the opposite side of the cavity 1160. It will be clear that, based on the geometric shapes required, all the embodiments can be made in such a way that the opening requires the safety cover to be pushed or pulled. The embodiment illustrated in Figures 10A and 10B differs from all the previous embodiments in that the locking element 10200 is assembled on the element to be placed in a safe condition S, instead of on the safety cover, and the coded body is executed in the safety cover 10400. In the embodiment illustrated, the locking element 10200 is similar to the locking element 1200, the only difference lying in that the abutting element 10220 is oriented in the direction of the safety cover 10400.

The safety device 10000 can thus be used to cover an element or hole S to be placed in a safe condition and comprises a safety cover 10400 and a locking element 10200 positioned between the safety cover 10400 and the element or hole S to be placed in a safe condition. Clearly, instead of the locking element 10200 illustrated above it will be possible to use any of the locking elements 1200, 3200, 4200, 6200 with suitable modifications which will be evident to the experts in the art.

The safety cover 10400 comprises a first contact surface which, for example, is similar to the contact surface 1130, 7130 and a second contact surface which, for example, is similar to the contact surface 1131, 7131. The locking element 10200 comprises an abutting element 10220 configured in such a way that it abuts the first contact surface and the second contact surface, in a manner similar to that described above. The safety cover 10400 furthermore comprises a release locking element positioned between the first contact surface and the second contact surface, analogously to the condition described above. As in the previous cases, the position and shape of the release locking element allow the safety device to be released only by the persons who know the correct combination, as described, for example, in relation to Figure 2.

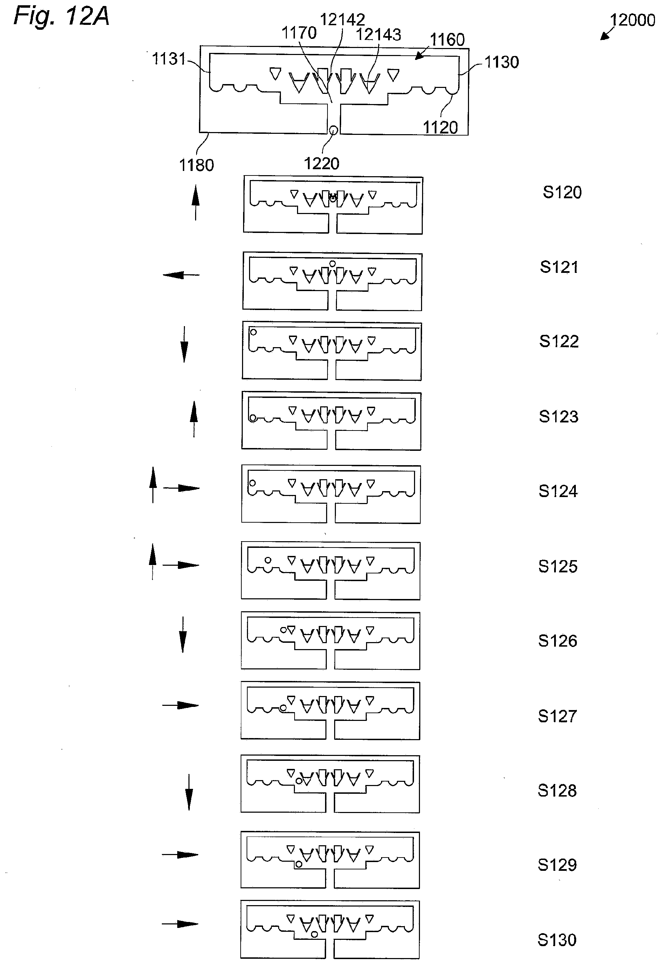

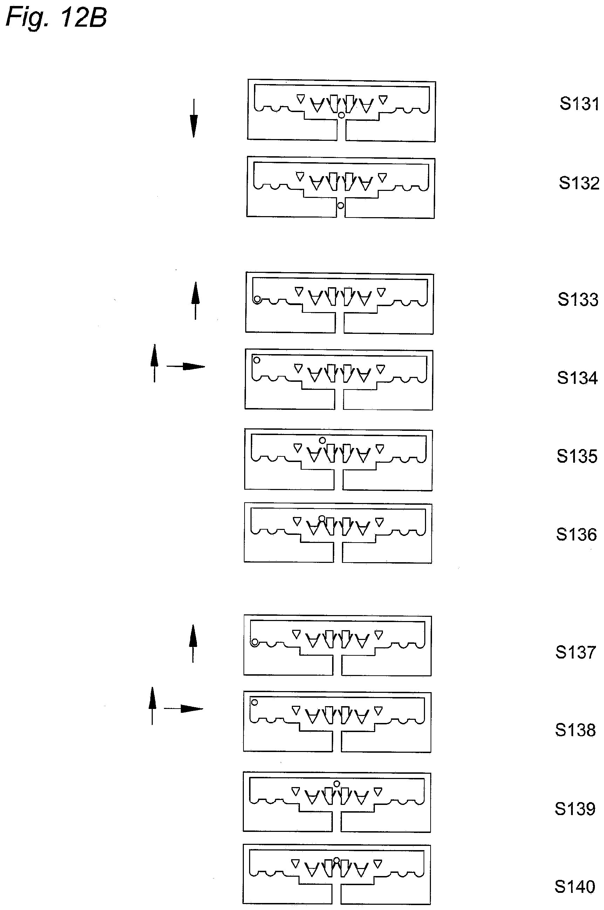

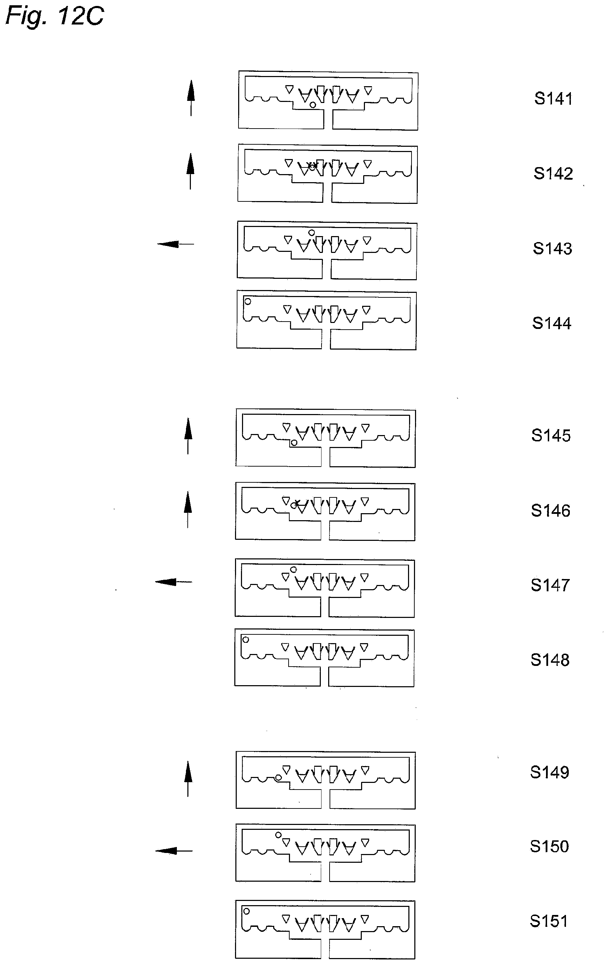

Figures 12A, 12B and 12C schematically show a safety device 12000 according to an alternative embodiment of the invention. The safety device 12000 comprises a release locking element positioned in the coding cavity 1160 and characterized in that it comprises one or more one-way passage elements 12142 and/or one or more oblique surfaces 12143.

These two characteristics advantageously make the safety device 12000 more comfortable and safer to use.

Specifically, the one-way passage elements 12142 are usually elements that allow the passage of the abutting element 1220 in one direction but prevent it in the opposite direction. Advantageously, the direction along which the passage is allowed is the direction of insertion of the abutting element 1220 in the coding cavity 1160.

In the embodiment illustrated, the one-way passage elements 12142 are implemented as small flexible blades positioned in such a way that they bend when the abutting element 1220 moves in the allowed direction, while they stop and prevent the passage of the abutting element 1220 in the opposite direction. It will be clear, however, that other shapes of the one-way passage elements 12142 can alternatively be implemented.

The oblique surfaces 12143 advantageously make it possible to direct the abutting element in the locking direction. In other words, they make it easier to position the device in the locking direction.

The operation of the device 12000 is clearly illustrated in the preceding description and the respective drawing. By way of example, steps S120-S132 illustrate an example of how the device can be locked and released. As can be seen, the presence of the one-way passage elements differentiates the release path from the locking path, so that the labyrinth through which the abutting element 1220 must be moved to release the device is more complicated.

Steps S133-S136 illustrate an example of how the device can be locked, steps S137-S140 illustrate a further example of how the device can be locked. As can be seen, due to the unidirectional movement of the one-way passage elements, it is not possible to release the device by moving the abutting element through the labyrinth-shaped path in the opposite direction.

Steps S141-S144, S145-S148 and S149-S151 illustrate three examples of how the device can be reset. Specifically, in the presence of a device whose position is unknown, the user needs to reset the device, in such a way as to define a known starting point for the application of the exact combination that allows the abutting element to be moved through the release labyrinth-shaped path.

The presence of the one-way passage elements 12142 and/or of the oblique surfaces 12141 in the release locking element advantageously makes it possible to simplify the reset step. Specifically, as can be seen, independently of the position of the abutting element 1220, whether under the release locking element or beside it, the abutting element 1220 can be easily brought back to the rest position by simply pressing and rotating the safety cover.

Even though, for the sake of clarity, in the description provided above the different embodiments have been described independently, each with a specific set of characteristics, it is evident that subsets of characteristics of any embodiment can be implemented, in such a way as to obtain a new embodiment. It will also be clear that any number of characteristics of an embodiment can be implemented together with any number of characteristics of one or more other embodiments, in such a way as to obtain a new embodiment. Thus, the possible embodiments of the invention are not limited to those described above but include any embodiment falling within the scope defined by the following claims.

### List of the reference numerals

1000: safety device
1100: coded body
1110: fixing element
1120: grooves
1130, 1131: contact surface
1140: release locking element
1150: external surface
1160: coding cavity
1170: release cavity
1180: external surface
1200: locking element
1210: body
1220: abutting element
1400: safety cover
1410: inner cover
1411: grooves
1412: seat
1414: thrust element
1420: anti perforation element
1430: outer cover
S: element to be placed in a safe condition
S20-S27: method of use
3200: locking element
3210: body
3220: abutting element
4200: locking element
4210: body
4220: abutting element
4230, 4231: sealing ring
4240: locking ring
4250: thrust ring
4400: safety cover
6200: locking element
6220: abutting element
6230, 6231: sealing ring
6232: anti rotation notches
6400: safety cover
6411: grooves
6415: anti rotation teeth
7100: coded body
7120: grooves
7130, 7131: contact surface
7140, 7141: release locking element
7132, 7133, 7142, 7143: abutting ring
7172: release cavity
7191, 7192, 7193: locking ring
7194: supporting element
8000: safety device
8410: inner cover
8430: outer cover
8414: thrust element
9000: safety device
9410: inner cover
9430: outer cover
9414: thrust element
10000: safety device
10170: release cavity
10200: locking element
10220: abutting element
10400: safety cover
11000: safety device
11170: release cavity
11215: anti rotation notches
11220, 11230: abutting element
11232: anti rotation teeth
11235: oblique surface
11236: complementary surface
11240: locking ring
11250: thrust ring
11330, 11331, 11332, 11333: sealing ring
11400: safety cover
11460, 11461: coding cavity
12000: safety device
12142: one-way passage element 12143: oblique surface
S120-S132: example of how the device can be locked and released
S133-S136: example of how the device can be locked
S145-S148: reset example
S149-S151: reset example

## Claims

1. Safety device (1000, 8000, 9000, 10000, 12000) designed to cover an element or hole (S) to be placed in a safe condition, the safety device comprising:
a coded body (1100, 7100),
a safety cover (1400, 4400, 6400),
a locking element (1200, 3200, 4200, 6200) positioned between the coded body (1100, 7100) and the safety cover (1400, 4400, 6400),
wherein the coded body (1100, 7100) comprises a first contact surface (1130, 7130) and a second contact surface (1131, 7131),
wherein the locking element (1200, 3200, 4200, 6200) comprises an abutting element (1220, 3220, 4220, 6220) configured so that it abuts the first contact surface (1130, 7130) and the second contact surface (1131, 7131),
wherein the coded body (1100, 7100) comprises a release locking element (1140, 7140, 7141) positioned between the first contact surface (1130, 7130) and the second contact surface (1131, 7131),
**characterized in that**
the coded body (1100, 7100) comprises a coding cavity (1160) inside which the abutting element (1220, 3220, 4220, 6220) and the release locking element (1140, 7140, 7141) can be at least partially positioned.

2. Safety device (1000, 8000, 9000, 10000, 12000) according to claim 1,
wherein the coding cavity (1160) is positioned between the first contact surface (1130, 7130) and the second contact surface (1131, 7131).

3. Safety device (1000, 8000, 9000, 10000, 12000) according to any of the preceding claims,
wherein the coded body (1100, 7100) comprises a release cavity (1170, 7172) connected to the coding cavity (1160), through which the abutting element (1220, 3220, 4220, 6220) can pass.

4. Safety device (1000, 8000, 9000, 10000, 12000) according to claim 3,
wherein the release locking element (1140, 7140, 7141) is at least partially positioned along a longitudinal extension of the release cavity (1170, 7172).

5. Safety device (1000, 8000, 9000, 10000, 12000) according to any of the preceding claims,
wherein the safety cover (1400, 4400, 6400) comprises grooves (1411, 6411).

6. Safety device (1000, 8000, 9000, 10000, 12000) according to claims 5 and 3,
wherein the distance between the first contact surface (1130, 7130) and the release cavity (1170, 7172) and/or the distance between the second contact surface (1131, 7131) and the release cavity (1170, 7172) depends on the position of the grooves (1411, 6411), and is preferably equal to the dimension of a plurality of grooves (1411, 6411), even more preferably equal to a multiple of the dimension of one of the grooves (1411, 6411).

7. Safety device (1000, 8000, 9000, 10000, 12000) according to any of the preceding claims,
wherein the safety cover (1400, 4400, 6400) comprises a seat (1412) for the locking element (1200).

8. Safety device (1000, 3000, 4000, 5000, 12000) according to any of the preceding claims,
wherein the locking element (1200, 3200, 4200) comprises a body (1210, 3210, 4210),
wherein the body (1210) describes a plane,
wherein the abutting element (1220, 3220, 4220) is inclined with respect to the plane.

9. Safety device (1000, 8000, 9000, 10000, 12000) according to any of the preceding claims,
wherein the coded body (7100) comprises a first abutting ring (7133) and a second abutting ring (7132),
wherein the first abutting ring (7133) comprises the first contact surface (7130), wherein the second abutting ring (7132) comprises the second contact surface (7131),
wherein the first abutting ring (7133) and the second abutting ring (7132) can be moved with respect to each other in a coding position of the coded body (7100) and are fixed with respect to each other in a locking position of the coded body (7100).

10. Safety device (1000, 8000, 9000, 10000, 12000) according to claim 9,
wherein the coded body (7100) comprises a plurality of locking rings (7191, 7192, 7193) between which the first abutting ring (7133) and the second abutting ring (7132) are positioned,
wherein the coded body (7100) comprises a supporting element (7194) on which the first abutting ring (7133), the second abutting ring (7132) and the plurality of locking rings (7191, 7192, 7193) are assembled.

11. Safety device (12000) according to any of the preceding claims,
wherein the locking element comprises one or more one-way passage elements (12142) configured in such a way as to allow the passage of the abutting element (1220) in one direction and prevent it in the opposite direction,
and/or wherein the locking element comprises one or more surfaces (12143) which are oblique with respect to a direction of insertion of the abutting element (1220) in the coded body.

12. Safety device (10000) designed to cover an element or hole (S) to be placed in a safe condition, the safety device comprising:
a safety cover (10400),
a locking element (1200, 3200, 4200, 6200, 10200) positioned between the safety cover (10400) and the element or hole (S) to be placed in a safe condition,
wherein the safety cover (10400) comprises a first contact surface (1130, 7130) and a second contact surface (1131, 7131),
wherein the locking element (1200, 3200, 4200, 6200, 10200) comprises an abutting element (1220, 3220, 4220, 6220, 10220) configured so that it abuts the first contact surface (1130, 7130) and the second contact surface (1131, 7131),
wherein the safety cover (10400) comprises a release locking element (1140, 7140, 7141) positioned between the first contact surface (1130, 7130) and the second contact surface (1131, 7131),
**characterized in that**
the safety cover (10400) comprises a coding cavity (1160) inside which the abutting element (1220, 3220, 4220, 6220, 10220) and the release locking element (1140, 7140, 7141) can be at least partially positioned

## Patentansprüche

1. Sicherheitsvorrichtung (1000, 8000, 9000, 10000, 12000), die dazu bestimmt ist, ein Element oder ein Loch (S) abzudecken, das in einen sicheren Zustand versetzt werden soll, wobei die Sicherheitsvorrichtung umfasst:
einen kodierten Körper (1100, 7100),
eine Sicherheitsabdeckung (1400, 4400, 6400),
ein Verriegelungselement (1200, 3200, 4200, 6200), das zwischen dem kodierten Körper (1100, 7100) und der Sicherheitsabdeckung (1400, 4400, 6400) angeordnet ist,
wobei der kodierte Körper (1100, 7100) eine erste Kontaktfläche (1130, 7130) und eine zweite Kontaktfläche (1131, 7131) umfasst,
wobei das Verriegelungselement (1200, 3200, 4200, 6200) ein Anschlagelement (1220, 3220, 4220, 6220) umfasst, das so ausgestaltet ist, dass es an der ersten Kontaktfläche (1130, 7130) und der zweiten Kontaktfläche (1131, 7131) anliegt,
wobei der kodierte Körper (1100, 7100) ein Freigabeverriegelungselement (1140, 7140, 7141) umfasst, das zwischen der ersten Kontaktfläche (1130, 7130) und der zweiten Kontaktfläche (1131, 7131) angeordnet ist,
**dadurch gekennzeichnet, dass**
der kodierte Körper (1100, 7100) einen Kodierhohlraum (1160) umfasst, in dem das Anschlagelement (1220, 3220, 4220, 6220) und das
Freigabeverriegelungselement (1140, 7140, 7141) zumindest teilweise angeordnet werden können.

2. Sicherheitsvorrichtung (1000, 8000, 9000, 10000, 12000) nach Anspruch 1, wobei der Kodierhohlraum (1160) zwischen der ersten Kontaktfläche (1130, 7130) und der zweiten Kontaktfläche (1131, 7131) angeordnet ist.

3. Sicherheitsvorrichtung (1000, 8000, 9000, 10000, 12000) nach einem der vorhergehenden Ansprüche,
wobei der kodierte Körper (1100, 7100) einen mit dem Kodierhohlraum (1160) verbundenen Freigabehohlraum (1170, 7172) umfasst, durch den das Anschlagelement (1220, 3220, 4220, 6220) passieren kann.

4. Sicherheitsvorrichtung (1000, 8000, 9000, 10000, 12000) nach Anspruch 3,
wobei das Freigabeverriegelungselement (1140, 7140, 7141) zumindest teilweise entlang einer Längsausdehnung des Freigabehohlraums (1170, 7172) angeordnet ist.

5. Sicherheitsvorrichtung (1000, 8000, 9000, 10000, 12000) nach einem der vorhergehenden Ansprüche,
wobei die Sicherheitsabdeckung (1400, 4400, 6400) Vertiefungen (1411, 6411) umfasst.

6. Sicherheitsvorrichtung (1000, 8000, 9000, 10000, 12000) nach Anspruch 5 und 3,
wobei der Abstand zwischen der ersten Kontaktfläche (1130, 7130) und dem Freigabehohlraum (1170, 7172) und/oder der Abstand zwischen der zweiten Kontaktfläche (1131, 7131) und dem Freigabehohlraum (1170, 7172) von der Position der Vertiefungen (1411, 6411) abhängt und vorzugsweise gleich der Abmessung einer Mehrzahl von Vertiefungen (1411, 6411), noch bevorzugter gleich einem Vielfachen der Abmessung einer der Vertiefungen (1411, 6411) ist.

7. Sicherheitsvorrichtung (1000, 8000, 9000, 10000. 12000) nach einem der vorhergehenden Ansprüche,
wobei die Sicherheitsabdeckung (1400, 4400, 6400) einen Sitz (1412) für das Verriegelungselement (1200) umfasst.

8. Sicherheitsvorrichtung (1000, 3000, 4000, 5000. 12000) nach einem der vorhergehenden Ansprüche,
wobei das Verriegelungselement (1200, 3200, 4200) einen Körper (1210, 3210, 4210) umfasst.
wobei der Körper (1210) eine Ebene beschreibt,
wobei das Anschlagelement (1220, 3220, 4220) in Bezug auf die Ebene schräg angeordnet ist.

9. Sicherheitsvorrichtung (1000, 8000, 9000, 10000, 12000) nach einem der vorhergehenden Ansprüche,
wobei der kodierte Körper (7100) einen ersten Anschlagring (7133) und einen zweiten Anschlagring (7132) umfasst,
wobei der erste Anschlagring (7133) die erste Kontaktfläche (7130) umfasst,
wobei der zweite Anschlagring (7132) die zweite Kontaktfläche (7131) umfasst,
wobei der erste Anschlagring (7133) und der zweite Anschlagring (7132) in einer Kodierposition des kodierten Körpers (7100) gegeneinander bewegt werden können und in einer Verriegelungsposition des kodierten Körpers (7100) gegeneinander fixiert sind.

10. Sicherheitsvorrichtung (1000, 8000, 9000, 10000, 12000) nach Anspruch 9,
wobei der kodierte Körper (7100) eine Vielzahl von Verriegelungsringen (7191, 7192, 7193) umfasst, zwischen denen der erste Anschlagring (7133) und der zweite Anschlagring (7132) angeordnet sind,
wobei der kodierte Körper (7100) ein Halteelement (7194) umfasst, auf dem der erste Anschlagring (7133), der zweite Anschlagring (7132) und die Vielzahl von Verriegelungsringen (7191, 7192, 7193) montiert sind.

11. Sicherheitsvorrichtung (12000) nach einem der vorhergehenden Ansprüche,
wobei das Verriegelungselement ein oder mehrere Einweg-Durchgangselemente (12142) umfasst, die so ausgestaltet sind, dass sie den Durchgang des Anschlagelements (1220) in einer Richtung ermöglichen und in der entgegengesetzten Richtung verhindern,
und/oder wobei das Verriegelungselement eine oder mehrere Oberflächen (12143) umfasst, die in Bezug auf eine Einführungsrichtung des Anschlagelements (1220) in den kodierten Körper schräg verlaufen.

12. Sicherheitsvorrichtung (10000) zum Abdecken eines Elements oder Lochs (S), das in einen sicheren Zustand versetzt werden soll, wobei die Sicherheitsvorrichtung umfasst:
eine Sicherheitsabdeckung (10400).
ein Verriegelungselement (1200, 3200, 4200, 6200, 10200), das zwischen der Sicherheitsabdeckung (10400) und dem Element oder Loch (S), das in einen sicheren Zustand versetzt werden soll, angeordnet ist,
wobei die Sicherheitsabdeckung (10400) eine erste Kontaktfläche (1130, 7130) und eine zweite Kontaktfläche (1131, 7131) umfasst,
wobei das Verriegelungselement (1200, 3200, 4200, 6200, 10200) ein Anschlagelement (1220, 3220, 4220, 6220, 10220) umfasst, das so ausgestaltet ist, dass es an der ersten Kontaktfläche (1130, 7130) und der zweiten Kontaktfläche (1131, 7131) anliegt,
wobei die Sicherheitsabdeckung (10400) ein Freigabeverriegelungselement (1140, 7140, 7141) umfasst, das zwischen der ersten Kontaktfläche (1130, 7130) und der zweiten Kontaktfläche (1131, 7131) angeordnet ist,
**dadurch gekennzeichnet, dass**
die Sicherheitsabdeckung (10400) einen Kodierhohlraum (1160) umfasst, in dem das Anschlagelement (1220, 3220, 4220, 6220, 10220) und das Freigabeverriegelungselement (1140, 7140, 7141) zumindest teilweise angeordnet werden können.

## Revendications

1. Dispositif de sécurité (1000, 8000, 9000, 10000, 12000) conçu pour couvrir un élément ou un trou (S) à placer dans un état sûr, le dispositif de sécurité comprenant:
un corps codé (1100, 7100),
un couvercle de sécurité (1400, 4400, 6400),
un élément de verrouillage (1200, 3200, 4200, 6200) positionné entre le corps codé (1100, 7100) et le couvercle de sécurité (1400, 4400, 6400),
dans lequel le corps codé (1100, 7100) comprend une première surface de contact (1130, 7130) et une seconde surface de contact (1131, 7131),
dans lequel l'élément de verrouillage (1200, 3200, 4200, 6200) comprend un élément de butée (1220, 3220, 4220, 6220) configuré de sorte qu'il bute contre la première surface de contact (1130, 7130) et la seconde surface de contact (1131, 7131),
dans lequel le corps codé (1100, 7100) comprend un élément de libération de verrouillage (1140, 7140, 7141) positionné entre la première surface de contact (1130, 7130) et la seconde surface de contact (1131, 7131),
**caractérisé en ce que**
le corps codé (1100, 7100) comprend une cavité de codage (1160) à l'intérieur de laquelle l'élément de butée (1220, 3220, 4220, 6220) et l'élément de libération de verrouillage (1140, 7140, 7141) peuvent être au moins partiellement positionnés.

2. Dispositif de sécurité (1000, 8000, 9000, 10000, 12000) selon la revendication 1,
dans lequel la cavité de codage (1160) est positionnée entre la première surface de contact (1130, 7130) et la seconde surface de contact (1131, 7131).

3. Dispositif de sécurité (1000, 8000, 9000, 10000, 12000) selon l'une quelconque des revendications précédentes,
dans lequel le corps codé (1100, 7100) comprend une cavité de libération (1170, 7172) reliée à la cavité de codage (1160), à travers laquelle l'élément de butée (1220, 3220, 4220, 6220) peut passer.

4. Dispositif de sécurité (1000, 8000, 9000, 10000, 12000) selon la revendication 3,
dans lequel l'élément de libération de verrouillage (1140, 7140, 7141) est au moins partiellement positionné le long d'une extension longitudinale de la cavité de libération (1170, 7172).

5. Dispositif de sécurité (1000, 8000, 9000, 10000, 12000) selon l'une quelconque des revendications précédentes,
dans lequel le couvercle de sécurité (1400,4400, 6400) comprend des rainures (1411, 6411).

6. Dispositif de sécurité (1000, 8000, 9000, 10000, 12000) selon les revendications 5 et 3,
dans lequel la distance entre la première surface de contact (1130, 7130) et le cavité de libération (1170, 7172) et/ou la distance entre la seconde surface de contact (1131, 7131) et le cavité de libération (1170, 7172) dépend de la position des rainures (1411, 6411), et est de préférence égale à la dimension d'une pluralité de rainures (1411, 6411), encore plus préférentiellement égale à un multiple de la dimension d'une des rainures (1411, 6411).

7. Dispositif de sécurité (1000, 8000, 9000, 10000, 12000) selon l'une quelconque des revendications précédentes,
dans lequel le couvercle de sécurité (1400, 4400, 6400) comprend un logement (1412) pour l'élément de verrouillage (1200).

8. Dispositif de sécurité (1000, 3000, 4000, 5000, 12000) selon l'une quelconque des revendications précédentes,
dans lequel l'élément de verrouillage (1200, 3200, 4200) comprend un corps (1210, 3210, 4210),
dans lequel le corps (1210) décrit un plan, dans lequel l'élément de butée (1220, 3220, 4220) est incliné par rapport au plan.

9. Dispositif de sécurité (1000, 8000, 9000, 10000, 12000) selon l'une quelconque des revendications précédentes,
dans lequel le corps codé (7100) comprend un premier anneau de butée (7133) et un second anneau de butée (7132),
dans lequel le premier anneau de butée (7133) comprend la première surface de contact (7130),
dans lequel le second anneau de butée (7132) comprend la seconde surface de contact (7131),
dans lequel le premier anneau de butée (7133) et le second anneau de butée (7132) peuvent être déplacées l'une par rapport à l'autre dans une position de codage du corps codé (7100) et sont fixés l'un par rapport à l'autre dans une position de verrouillage du corps code (7100).

10. Dispositif de sécurité (1000, 8000, 9000, 10000, 12000) selon la revendication 9,
dans lequel le corps codé (7100) comprend un pluralité d'anneaux de verrouillage (7191, 7192, 7193) entre lesquels sont positionnés le premier anneau de butée (7133) et le second anneau de butée (7132),
dans lequel le corps codé (7100) comprend un élément de support (7194) sur lequel le premier anneau de butée (7133), le second anneau de butée (7132) et la pluralité d'anneaux de verrouillage (7191, 7192, 7193) sont assemblées.

11. Dispositif de sécurité (12000) selon l'une quelconque des revendications précédentes,
dans lequel l'élément de verrouillage comprend un ou plusieurs éléments de passage unidirectionnels (12142) configurés de manière à permettre le passage de l'élément de butée (1220) dans un sens et à l'empêcher dans le sens opposé,
et/ou dans lequel l'élément de verrouillage comprend une ou plusieurs surfaces (12143) qui sont obliques par rapport à une direction d'insertion de l'élément de butée (1220) dans le corps codé.

12. Dispositif de sécurité (10000) conçu pour couvrir un élément ou un trou (S) à placer dans un état sûr, le dispositif de sécurité comprenant:
un couvercle de sécurité (10400),
un élément de verrouillage (1200, 3200, 4200, 6200, 10200) positionné entre le couvercle de sécurité (10400) et l'élément ou un trou (S) à placer dans un état sûr, dans lequel le couvercle de sécurité (10400) comprend une première surface de contact (1130, 7130) et une seconde surface de contact (1131, 7131),
dans lequel l'élément de verrouillage (1200, 3200, 4200, 6200, 10200) comprend un élément de butée (1220, 3220, 4220, 6220, 10220) configuré de sorte qu'il bute contre la première surface de contact (1130, 7130) et la seconde surface de contact (1131, 7131),
dans lequel le couvercle de sécurité (10400) comprend un élément de libération de verrouillage (1140, 7140, 7141) positionné entre la première surface de contact (1130, 7130) et la seconde surface de contact (1131, 7131),
**caractérisé en ce que**
le couvercle de sécurité (10400) comprend une cavité de codage (1160) à l'intérieur de laquelle l'élément de butée (1220, 3220, 4220, 6220, 10220) et l'élément de libération de verrouillage (1140, 7140, 7141) peuvent être au moins partiellement positionnés.
